# EUROPÄISCHE PATENTANMELDUNG

(11) **EP 0 735 788 A2**
(43) Veröffentlichungstag der Anmeldung: **02.10.1996**
(21) Anmeldenummer: 96104560.6
(22) Anmeldetag: 22.03.1996
(51) Int. Cl.: H04Q 7/20

(54) **Streckenfunksystem und Mobilstation dafür**

(30) Priorität: 29.03.1995 DE 19511520
(71) Anmelder: Alcatel SEL Aktiengesellschaft, D-70435 Stuttgart (DE)
(72) Erfinder: Frank, Matthias, 75177 Pforzheim (DE)
(74) Vertreter: Knecht, Ulrich Karl, Dipl.-Ing.

(57) **Zusammenfassung**

Vorgeschlagen wird ein Streckenfunksystem mit einer einfachen Netzstruktur, das sich für eine gesicherte Funkübertragung eignet.

Das Streckenfunksystem enthält Funkstationen (R), die entlang einer Fahrstrecke angeordnet sind und eine Mobilstation (MS), die in einem sich entlang der Fahrstrecke bewegenden Fahrzeug angeordnet ist und die einen Funksendeempfänger (TRX) und eine damit verbundene Datenbank (HLR) enthält, in der Kennungen (IDn, IDn+1) für die Funkstationen (R) eintragbar sind. Es ist ein Signalisierungskanal (ACH) vorgesehen, auf dem jede Funkstation (R) zum Funkverbindungsaufbau ihre Kennung an die Mobilstation sendet, um sich in die Datenbank (HLR) einzubuchen.

Somit bildet die Mobilstation (MS) eine einzelne fahrende Funkzelle zur Funkversorgung derjenigen Funkstationen (R), die sich innerhalb dieser Funkzelle befinden. Die im wesentlichen aus den Funkstationen bestehende Infrastruktur ist einfach ausführbar und erfordert keine aufwendige Netzplanung. Weiterhin können sich gleichzeitig zwei und mehr Funkstationen (R) in die fahrende Funkzelle einbuchen, wodurch eine gesicherte Funkübertragung möglich ist.

## Beschreibung

Die Erfindung betrifft ein Streckenfunksystem mit Funkstationen die entlang einer Fahrstrecke angeordnet sind, sowie eine Mobilstation für ein sich entlang der Fahrstrecke bewegendes Fahrzeug.

Aus DE 42 22 237 A1 sind ein solches Streckenfunksystem und eine solche Mobilstation bekannt. Das dortige Streckenfunksystem wird als zellulares Funksystem für den Bahnfunk beschrieben, bei dem jeweils zueinander benachbarte Funkstationen unterschiedliche Funkfrequenzen benutzen, so daß sich entlang der Fahrstrecke eine Vielzahl von Funkzellen in Form einer Funkzellenkette aneinanderreihen. Die dort beschriebene Mobilstation innerhalb des Fahrzeugs (Zug) ist mit derjenigen Funkstation verbunden, in deren Funkzelle sie sich befindet. Wie in DE 42 22 237 A2 beschrieben, soll zur einfache Realisierung des Streckenfunksystems dieses nach dem Mobilfunk-Standard "GSM" (Global System for Mobile Communications) ausgelegt sein. Eine mit den Funkstationen verbundene Steuereinrichtung steuert während der Fahrt des Zuges ein Weiterreichen der Funkverbindung von einer Funkzelle zur nächsten. Jedoch erfordert das Weiterreichen innerhalb eines zellularen Funknetzes prinzipiell eine aufwendige Netzstruktur. So werden beispielsweise im GSM-Netz Funkvermittlungsstellen mit sogenannten Heimatdateien und Besucherdateien benötigt zum Registrieren (Einbuchen) der Mobilstation bei Funkverbindungsaufbau und zum Ermitteln der aktuellen und nächsten Funkzelle ("serving cell" und "target cell") beim Weiterreichen der Funkverbindung. Darüberhinaus ist es in dem bekannten Streckenfunksystem, dessen Netzstruktur dem GSM-Standard entspricht, nicht möglich zur Sicherung einer Funkübertragung gleichzeitig zwei oder mehrere Funkverbindungen zwischen der Mobilstation und verschiedenen Funkstationen aufzubauen.

Aufgabe der Erfindung ist es ein Streckenfunksystem und eine Mobilstation dafür so anzugeben, daß das Streckenfunksystem mit einer einfachen Netzstruktur aufgebaut werden kann und sich für eine gesicherte Funkübertragung eignet.

Gelöst wird die Aufgabe durch ein Streckenfunksystem mit den Merkmalen nach Anspruch 1 und durch eine Mobilstation mit den Merkmalen nach Anspruch 8.

Demnach enthält die Mobilstation, die sich innerhalb eines Fahrzeuges befindet, einen Funksendeempfänger und eine damit verbundene Datenbank. Funkstationen, die entlang der Fahrstrecke des Fahrzeugs angeordnet sind, senden zum Funkverbindungsaufbau mit der Mobilstation Kennungen. Jede Kennung ist in die Datenbank eintragbar, um ein Einbuchen der jeweiligen Funkstation zu ermöglichen. Somit bildet die Mobilstation eine einzelne fahrende Funkzelle zur Funkversorgung derjenigen Funkstationen, die sich innerhalb dieser Funkzelle befinden. Die im wesentlichen aus den Funkstationen bestehende Infrastruktur ist einfach ausführbar. Die Infrastruktur kann ohne eine aufwendige Netzplanung, wie sie für herkömmliche Funkzellennetze erforderlich ist, aufgebaut und erweitert werden. Weiterhin können sich gleichzeitig zwei und mehr Funkstationen in die fahrende Funkzelle einbuchen, wodurch eine gesicherte Funkübertragung möglich ist.

Vorteilhafte Ausgestaltungen der Erfindung sind den Unteransprüchen zu entnehmen.

Im folgenden wird die Erfindung anhand eines Ausführungsbeispiels und unter Zuhilfenahme einer Figur beschrieben, die schematisch den Aufbau eines Streckenfunksystems für den Bahnmobilfunk zeigt.

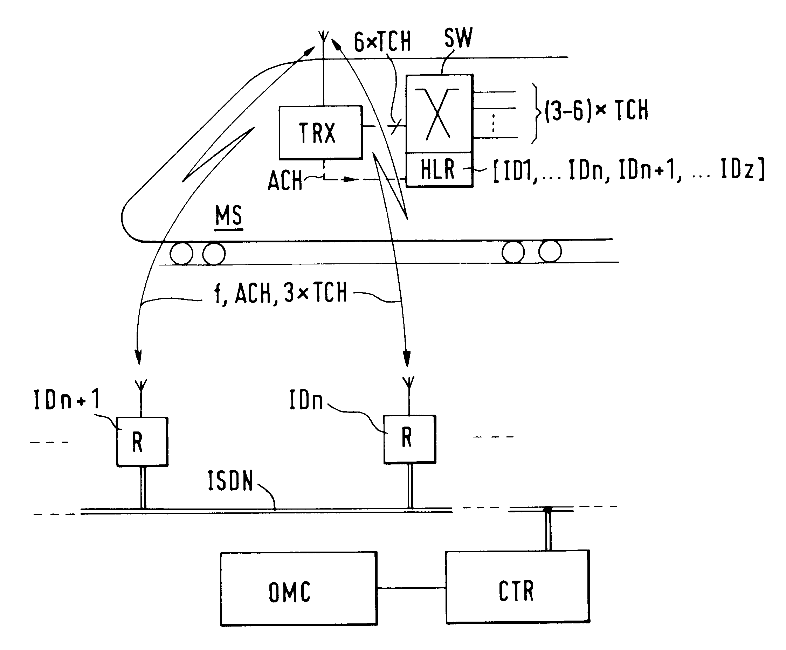

Das in der Figur dargestellte Streckenfunksystem enthält Funkstationen R, die entlang einer Fahrstrecke angeordnet und über ein drahtgebundenes Netzwerk ISDN mit einem Leitrechner CTR verbunden sind. Der Leitrechner wird von einer Betriebs- und Wartungszentrale OMC aus bedient.

Neben den oben genannten Komponenten, die die Infrastruktur des Streckenfunksystems bilden, zeigt die Figur ein Fahrzeug, das sich entlang der Fahrstrecke bewegt und das eine Mobilstation MS mit einem Funksendeempfänger TRX enthält, der Funksignale mit mindestens einer der Funkstationen R austauscht.

In diesem Beispiel befindet sich die Mobilstation MS in einem Hochgeschwindigkeitszug. Der Funksendeempfänger TRX wie auch die Funkstationen R sind im wesentlichen nach dem Mobilfunkstandard GSM (Global System for Mobile Communications) ausgeführt. Demnach sind die Funksignale TDMA-Signale, die auf einer Trägerfrequenz f ≈ 900 MHz übertragen werden. Sechs von acht TDMA-Kanälen dienen als Verkehrskanäle TCH zur drahtlosen Nachrichtenübertragung von Sprach- und/oder Datensignalen. Zwei der TDMA-Kanäle dienen als Signalisierungskanäle ACH, auf denen die Funkstationen R jeweils ihre Kennung (hier z.B. IDn oder IDn+1) an die Mobilstation MS sendet, um sich in die fahrende Funkzelle einzubuchen.

Zum Einbuchen enthält die Mobilstation MS eine mit dem Funksendeempfänger TRX verbundene Datenbank HLR, in der die Kennungen ID1, ... IDn, IDN+1, ... IDz aller Funkstationen R eingetragen sind, die entlang der Fahrstrecke angeordnet sind. Die Datenbank HLR ist hier Teil eines Kommunikationsrechners der eine mit dem Funksendeempfänger TRX verbundene Schalteinrichtung SW steuert. Diese Schalteinrichtung dient zum Schalten der Verkehrskanäle TCH auf Endeinrichtungen zur Fernüberwachung des Hochgeschwindigkeitszuges, zur Betriebskommunikation oder zur öffentlichen Kommunikation. Demnach wird das Streckenfunksystem sowohl zur Funkzugbeeinflussung als auch für den öffentlichen Mobilfunk genutzt. Der Kommunikationsrechner ist hier ein Personal-Computer, der auch eine Zuweisung freier Verkehrskanäle TCH an die Funkstationen R, die einen Funkverbindungswunsch signalisieren, steuert. Somit ist der Kommunikationsrechner auch als Funkkanalsteuerung ausgeführt. Die genaue Funktionsweise des in der Figur gezeigten Streckenfunksystems wird nun beschrieben:

Vor Fahrtbeginn des Hochgeschwindigkeitszuges werden die Kennungen ID1 bis IDZ der Funkstationen R in die Datenbank HLR eingetragen. Dazu liest der Kommunikationsrechner die Kennungen von einem Datenträger, wie z.B. einer Floppy-Disk oder einer CD-ROM. Dieser Datenträger enthält neben den Kennungen auch andere Daten zum Streckenfahrplan des Zuges, wie etwa Haltestationen, Ankunfts- und Abfahrtszeiten.

Zur Funkverbindung zwischen der Mobilstation MS und den Funkstationen R an der Strecke werden im Frequenzduplex und nach dem TDMA-Verfahren entsprechend dem GSM-Standard Funksignale ausgetauscht. In der Figur ist nur die Trägerfrequenz f für die Funkverbindung von den Funkstationen R zu der Mobilstation MS angegeben. Auf dieser Trägerfrequenz sind zwei Signalisierungskanäle ACH und sechs Verkehrskanäle TCH eingerichtet.

Das gezeigte Streckenfunksystem ist ein Gleichwellenfunksystem, d.h. ein Funksystem, bei dem nur die eine Abwärts-Trägerfrequenz f = 960 MHz und nur die eine (hier nicht gezeigte) Aufwärts-Trägerfrequenz f' = 915 MHz benutzt werden. Die über das Netzwerk ISDN miteinander verbundenen Funkstationen R sind synchronisiert und sind in Sichtweite zueinander angeordnet. Dadurch können immer mindestens zwei der Funkstationen R in Sichtfunkverbindung mit der Mobilstation MS stehen, wie es für eine sichere Funkzugbeeinflussung erforderlich ist. Der Leitrechner CTR steuert über das Netzwerk ISDN die Funkstationen R so, daß immer zwei benachbarte Funkstationen TDMA-Funksignale mit der Mobilstation MS austauschen. Dazu sendet jede der beiden Funkstationen R in Abwärtsrichtung auf einem der zwei Signalisierungskanälen ACH und auf drei der sechs Verkehrskanäle TCH. Der Empfang in Aufwärtsrichtung erfolgt entsprechend. Der Aufund Abbau einer Funkverbindung geschieht wie folgt:

Bei Fahrtbeginn des Zuges wird von der Betriebs- und Wartungszentrale OMC der Leitrechner CTR so bedient, daß dieser das Einschalten derjenigen beiden Funkstationen steuert, die sich in nächster Nähe zum Zug (am Abfahrtsbahnhof) befinden. Diese Funkstationen signalisieren ihre jeweiligen Kennungen (hier ID1 und ID2) an die Mobilstation. Die von dem Funksendeemfpänger TRX der Mobilstation empfangenen Kennungen werden innerhalb des Kommunikationsrechners mit den in der Datenbank HLR eingetragenen Kennungen verglichen. Stellt der Kommunikationsrechner eine Übereinstimmung der empfangenen mit den eingetragenen Kennungen fest, so steuert der Kommunikationsrechner eine Zweisung der Verkehrskanäle TCH an die Funkstationen. Über diese Verkehrskanäle TCH werden Daten- und Sprachsignale zwischen den im Zug befindlichen Endgeräten und den mit dem Netzwerk ISDN verbundenen Endeinrichtungen ausgetauscht.

Die im Zug befindlichen Endgeräte, wie etwa Bordrechner, Sprechstellen für die Betriebskommunikation oder Telekommunikationsendgeräte für die Passagiere, sind an die Schalteinrichtung SW angeschlossen. Die mit dem Netzwerk ISDN verbundenen (hier nicht dargestellten) Endeinrichtungen sind z.B. Rechner zur Zugbeeinflussung oder Vermittlungsstellen zum öffentlichen Telekommunikationsnetz. Der Leitrechner CTR steuert die Funkstationen so, daß die Daten für eine Funkzugbeeinflussung parallel über zwei benachbarte Funkstationen R mit der Mobilstation MS ausgetauscht werden. Dazu werden ein Verkehrskanal TCH der einen und ein Verkehrskanal TCH der anderen Funkstation R mit demselben Datensignal belegt. Dadurch wird zur Sicherung der Funkzugbeeinflussung eine Datenübertragung über zwei unabhängige Funkpfade durchgeführt. Für die nicht zu sichernde Nachrichtenübertragung werden die verbleibenden Verkehrskanäle nur einfach belegt. Vor der Belegung eines jeden Verkehrskanals TCH prüft der mit der Schalteinrichtung SW verbundene Kommunikationsrechner, ob der Verkehrskanal eine Mindestübertragungsqualität hat, die durch eine vorgegbene Bitfehlerrate bestimmt ist. Die Funkverbindungen werden bei Fahrt des Zuges wie folgt von einer Funkstation zu einer anderen umgeschaltet:

Sowohl der Kommunikationsrechner an Bord des Hochgeschwindigkeitszuges als auch der Leitrechner CTR überwachen die bestehenden Funkverbindungen. Stellt etwa der Leitrechner CTR zuerst fest, daß sich eine Funkverbindung verschlechtert (hier z.B. die Funkverbindung zwischen der Mobilstation MS und der Funkstation R mit der Kennung IDn), so schaltet der Leitrechner CTR diejenige Funkstation ein, die entsprechend der Fahrtrichtung des Zuges die nächstkommende Funkstation ist, um ein Aussenden der Kennung (hier IDn+2) zu steuern. Anschließend weist der Kommunikationsrechner dieser Funkstation Funkkanäle zu, durch ein Umbuchen der beiden Kennungen (d.h. hier von IDn auf IDn+2). Demnach wird die Funkverbindung von einer Funkstation zur übernächsten Funkstation geschaltet. Die andere Funkverbindung (hier zwischen der Mobilstation und der Funkstation mit der Kennung IDn+1) bleibt dabei erhalten. Das oben beschriebene Umschalten kann auch von der Mobilstation MS ausgelöst werden, falls diese vor dem Kommunikationsrechner eine Verschlechterung einer Funkverbindung feststellt.

Das beschriebene Umschalten der Funkverbindung erfolgt im Gleichwellenbetrieb, so daß ein Wechsel der Trägerfrequenzen nicht erforderlich ist. Demnach entfällt hier ein Weiterreichen (Handoff) von Funkverbindungen, wie es im herkömmlichen Zellular-Funksystem erforderlich ist. Folglich kann hier das Problem eines sogenannten Massen-Handoff, d.h. eines gleichzeitigen Weiterreichens einer Vielzahl von Funkverbindungen, nicht auftreten. Sowohl die Mobilstation als auch die Funkstationen sind daher sehr einfach aufgebaut. Das Umschalten der Funkverbindung ist auch mittels Überwachung der Signallaufzeiten denkbar, die ebenfalls ein Maß für die Übertragungsqualität darstellen. Weiterhin ist ein Umschalten ohne Überwachung der Funkverbindung denkbar, bei dem der Leitrechner aufgrund der bekannten Aufenthaltszeiten des Zuges für jeden einzelnen Streckenabschnitt ein Ein- und Ausschalten der entsprechenden Funkstation steuert. Es ist auch denkbar, daß zum Auf- und Abbau der Funkverbindungen die Funkstationen einen der Signalisierungskanäle überwachen, auf dem die Mobilstation ein Synchronisierungssignal sendet. Bei Empfang des Synchronisierungssignales durch eine Funkstation sendet diese ihre Kennung automatisch aus und signalisiert somit einen Funkverbindungswunsch an die Mobilstation. In dem hier beschriebenen Streckenfunksystem werden Gleichwellen-Funksignale nach dem TDMA-Verfahren übertragen. Es ist auch denkbar andere Übertragungsverfahren, wie etwa CDMA, einzusetzen. Weiterhin ist auch der Aufbau eines erfindungsgemäßen Streckenfunksystems mit einer zellularen, d.h. mehrfrequenten, Netzstruktur denkbar.

## Patentansprüche

1. Streckenfunksystem mit Funkstationen (R), die entlang einer Fahrstrecke angeordnet sind, und mit einer Mobilstation (MS), die in einem sich entlang der Fahrstrecke bewegenden Fahrzeug angeordnet ist und die einen Funksendeempfänger (TRX) umfaßt,
**dadurch gekennzeichnet**, daß die Mobilstation (MS) eine mit dem Funksendeempfänger (TRX) verbundene Datenbank (HLR) umfaßt, in der Kennungen (IDn, IDn+1) für die Funkstationen (R) eintragbar sind, und daß mindestens ein Signalisierungskanal (ACH) vorgesehen ist, auf dem jede Funkstation (R) zum Funkverbindungsaufbau ihre Kennung an die Mobilstation (MS) sendet, um sich in die Datenbank (HLR) einzubuchen.

2. Streckenfunksystem nach Anspruch 1,
dadurch gekennzeichnet, daß der Funksendeempfänger ein mehrkanaliger Funksendeempfänger (TRX) ist, der eine Funkkanalsteuerung enthält, die den eingebuchten Funkstationen (R) zum Aufbau der Funkverbindung mindestens einen freien Verkehrskanal (TCH) zuweist.

3. Streckenfunksystem nach Anspruch 2,
dadurch gekennzeichnet, daß die Verkehrskanäle (TCH) TDMA- und/oder CDMA-Kanäle einer Gleichwellenfunkverbindung sind.

4. Streckenfunksystem nach Anspruch 2,
dadurch gekennzeichnet, daß der Funksendeempfänger (TRX) mit einer Schalteinrichtung (SW) verbunden ist, die zu Endeinrichtungen des Fahrzeugs nur solche der Verkehrskanäle (TCH) durchschaltet, die eine vorgebbare Mindestübertragungsqualität haben.

5. Streckenfunksystem nach Anspruch 2,
dadurch gekennzeichnet, daß die Verkehrskanäle (TCH) Sprach- und/oder Datenkanäle sind.

6. Streckenfunksystem nach Anspruch 1,
dadurch gekennzeichnet, daß die Funkstationen (R) über ein drahtloses oder über ein drahtgebundenes Netzwerk (ISDN) mit einem Leitrechner (CTR) verbunden sind, der von einer Betriebs- und Wartungszentrale (OMC) des Streckenfunksystems aus bedienbar ist und der zum Aufbau der Funkverbindungen die Funkstationen (R) aufgrund von Fahrplandaten steuert, so daß stets zumindest zwei der Funkstationen (R) mit der Mobilstation (MS) in Funkverbindung sind.

7. Streckenfunksystem nach Anspruch 1,
dadurch gekennzeichnet, daß die Mobilstation auf dem mindestens einen Signalisierungskanal ein Synchronisierungsignal sendet, daß die Funkstationen den mindestens einen Signalisierungskanal überwachen und bei Empfang des Synchronisierungssignals ihre jeweilige Kennung zum Funkverbindungsaufbau mit der Mobilstation an diese senden.

8. Mobilstation (MS) für ein sich entlang einer Fahrstrecke bewegendes Fahrzeug, die einen Funksendeempfänger (TRX) umfaßt zur Funkverbindung mit Funkstationen (R), die entlang der Fahrstrecke angeordnet sind,
**dadurch gekennzeichnet**, daß die Mobilstation (MS) eine mit dem Funksendeempfänger (TRX) verbundene Datenbank (HLR) enthält, in der Kennungen (IDn, IDn+1) für die Funkstationen (R) eintragbar sind, und daß der Funksendeempfänger (TRX) auf einem Signalisierungskanal (ACH) diejenige Kennung empfängt, die jeweils eine der Funkstationen sendet, um sich in die Datenbank einzubuchen.
